# EUROPÄISCHE PATENTSCHRIFT

(11) **EP 2 687 077 B1**
(45) Veröffentlichungstag und Bekanntmachung des Hinweises auf die Patenterteilung: **27.12.2017**
(21) Anmeldenummer: 13176699.0
(22) Anmeldetag: 16.07.2013
(51) Int. Cl.: A01D 34/00

(54) **Mähroboter**
Robotic mower
Tondeuse robotisée

(30) Priorität: 17.07.2012 DE 202012102637 U
(43) Veröffentlichungstag der Anmeldung: 22.01.2014
(73) Patentinhaber: AL-KO KOBER Ges.m.b.H, 6277 Zellberg (AT)
(72) Erfinder: Buchmiller, Wolfgang, 89312 Günzburg (DE); De Filippo, Antonio, 73342 Bad Ditzenbach (DE)
(74) Vertreter: Dr. Binder & Binder GbR

(56) Entgegenhaltungen:
- EP-A2- 1 582 132
- EP-A2- 2 159 659
- BE-A6- 1 004 248
- US-B1- 6 481 515

## Beschreibung

Die Erfindung betrifft einen Mähroboter mit einer Detektionseinrichtung und ein Detektionsverfahren mit den Merkmalen im Oberbegriff des Verfahrens- und Vorrichtungshauptanspruchs.

Ein solcher Mähroboter ist aus der WO 03/103375 A1 bekannt. Er weist ein Chassis, ein Fahrwerk mit einem Fahrantrieb, ein rotierendes Schneidmesser mit einem Antrieb sowie eine Steuerung auf. Ferner hat der Mähroboter auf dem Chassis eine bewegliche Abdeckung, die auf einem Dreipunkt-Auflager aufliegt. Das Auflager hat zwei Stützsäulen, die mit der Abdeckung über Gummipuffer verbunden sind und die jeweils mit einer

Detektionseinrichtung mit einem Hallsensor zur Erfassung von seitlichen Ablenkungen der Abdeckung zusammenwirken. Außerdem sind an den höhenbeweglich geführten Lenkachsen zusätzliche Sensoren zur Erfassung von Hebebewegungen der Abdeckung oder Löchern im Untergrund vorhanden. Der vorbekannte Mähroboter ist mit seiner Sensorik fehleranfällig.

Die BE 1 004 248 A6 zeigt einen Mähroboter mit einem Bewegungsfühler für eine bewegliche Solarzellenplatte.

Die US 6,481,515 B1 betrifft einen Reinigungsroboter für den Haushalt und geschlossene Räume.

Es ist Aufgabe der vorliegenden Erfindung, einen selbst fahrenden Mähroboter mit einer besseren Detektionseinrichtung und ein besseres Detektionsverfahren aufzuzeigen.

Die Erfindung löst diese Aufgabe mit den Merkmalen im Verfahrens- und Vorrichtungshauptanspruch.
Der beanspruchte selbstfahrende und selbst lenkende Mähroboter hat den Vorteil, dass die Detektionseinrichtung besser und sicherer funktioniert. Sie hat auch weniger Bau- und Kostenaufwand. Ferner wird das Detektionsverfahren verbessert.

Die beanspruchte Detektionstechnik bietet einerseits eine hohe Sicherheit gegen Unfallgefährdung und kann andererseits die automatische Steuerung und Bewegung des selbstfahrenden Mähroboters wirksam unterstützen. Die bewegliche, bevorzugt haubenförmige und das Chassis umgebende Abdeckung bildet eine Art Mechaniksensor des Mähroboter, der Kollisionen mit Hindernissen im Fahrweg einerseits und unfallträchtige Handhabungsbewegungen eines Bedieners andererseits aufnimmt und an die Detektionseinrichtung übermittelt, welche diese Bewegungen detektieren und voneinander unterscheiden kann. Die Unterscheidung kann nach Art, Größe und Richtung sowie nach Ursache der Abdeckungsbewegung erfolgen. Mittels der Steuerung können entsprechende Sicherheits- und Fahrsteuerungsmaßnahmen ausgelöst werden.

Die beanspruchte Detektionstechnik hat gegenüber dem Stand der Technik den Vorteil einer hohen Sensibilität. Hierfür ist die vom Auflager örtlich getrennte Anordnung der Detektionseinrichtung von Vorteil, wodurch zum einen bereits sehr kleine Bewegungen und zum anderen alle Arten von Bewegungen der Abdeckung in allen Richtungen erfasst werden können. Die Anordnung in einem Zentralbereich des Chassis und ggf. auch in erhöhter Position ist hierfür von Vorteil. Die Entkopplung vom Auflager schließt außerdem Störeinflüsse aus. Die Detektion der Abdeckungsbewegung kann direkt zwischen Abdeckung und Chassis erfolgen.

Mit der erfindungsgemäßen Ausbildung der Detektionseinrichtung, erfolgt mit einer Sensoranordnung auch eine Wegmessung, mit der unterschiedliche Effekte erzielbar sind. Die Detektionseinrichtung und deren Sensoranordnung sind hierüber einstellbar. Ferner können erfasste und ggf. mehrachsige Abdeckungsbewegungen anhand der gemessenen Wege in ihrer Bedeutung und Ursache bewertet werden, was besonders sichere und zielgerichtete Reaktionen der Steuerung ermöglicht.

Der Mähroboter kann mit einer einzelnen bzw. einzigen Detektionseinrichtung auskommen, was den Bau- und Steueraufwand erheblich mindert. Außerdem kann diese eine Detektionseinrichtung eine ggf. mehrteilige Sensoranordnung haben und kann mehrachsige Abdeckungsbewegungen zuverlässig sensieren und unterscheiden.

In einer Ausführungsform sind drei oder mehr, insbesondere fünf Lagerstellen mit einer ringartigen Verteilung um einen zentralen Chassisbereich und eine dort positionierte Detektionseinrichtung angeordnet. Eine Ausführung sieht vor, dass die Detektionseinrichtung mit dem Chassis und der Abdeckung verbunden ist. Bevorzugt ist ein Geber der Detektionseinrichtung an der Abdeckung und die Sensoranordnung am Chassis angeordnet. Eine Sensoranordnung der Detektionseinrichtung weist bevorzugt eine Platine mit Sensoren, insbesondere einem Magnet- und Hallsensor, auf. Die Detektionseinrichtung, insbesondere die Sensoranordnung, ist mit einer Steuerung verbunden. Bevorzugt weist die auf dem Chassis angeordnete Abdeckung des Mähroboters einen Griff auf. Vorteilhaft ist eine zusätzliche Abstützung der Abdeckung auf dem Chassis durch eine Feder.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: eine perspektivische Draufsicht auf einen Mähroboter mit Abdeckung,
- Figur 2:: eine andere perspektivische Draufsicht auf den Mähroboter von Figur 1 mit abgenommener Abdeckung,
- Figur 3:: einen Längsschnitt durch den Mähroboter von Figur 1 und 2 mit aufgesetzter Abdeckung,
- Figur 4:: einen Querschnitt durch den Mähroboter von Figur 1 und 2,
- Figur 5:: eine abgebrochene und längsgeschnittene Detailansicht einer Lagerstelle zwischen Abdeckung und Chassis,
- Figur 6 und 7:: eine abgebrochene Detaildarstellung einer Detektionseinrichtung im Längsschnitt und im Querschnitt und
- Figur 8:: eine Variante der Sensoreinrichtung im abgebrochenen Schnitt.

Die Erfindung betrifft ein selbstfahrendes Bodenbearbeitungsgerät (1) mit einer Detektionseinrichtung (5). Die Erfindung betrifft ferner ein Detektionsverfahren.

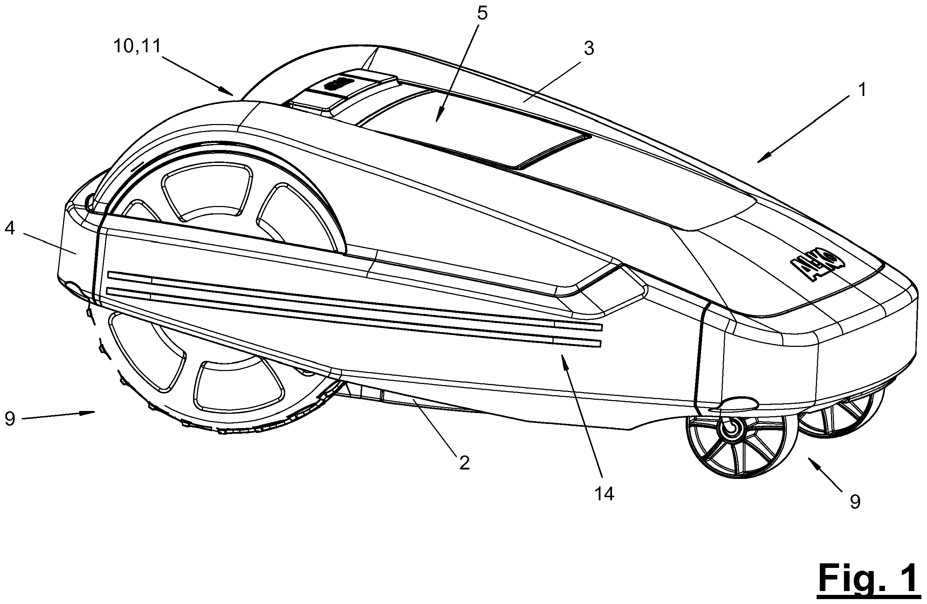

Figur 1 bis 4 zeigen in verschiedenen Ansichten ein selbstfahrendes Bodenbearbeitungsgerät (1), welches im gezeigten Ausführungsbeispiel als Mähroboter ausgebildet ist. Durch seine Selbstfahrfunktion bewegt es sich eigenständig angetrieben auf vorgegebenen oder selbst gesuchten Fahrwegen. Das Bodenbearbeitungsgerät (1) bzw. der Mähroboter ist selbstlenkend.

Der Mähroboter (1) weist gemäß Figur 1 bis 4 ein Chassis (2) mit einem Fahrwerk (9) und einem Fahrantrieb (10) sowie einer Steuerung (11) auf. Das Fahrwerk (9) wird z.B. von zwei mit dem Fahrantrieb (10) verbundenen heckseitigen großen Antriebsrädern und zwei kleineren frontseitigen Laufrädern gebildet. Die Laufräder sind frei drehbar und haben eine ebenfalls frei drehbare aufrechte Schwenkachse, so dass sie den durch einen unterschiedlichen Antriebsrädervorschub veranlassten Richtungsänderungen folgen können.

Der Mähroboter (1) hat eine längliche Form und eine Längsrichtung (34). Er bewegt sich vorzugsweise in Längsrichtung vorwärts und kann dabei auch Kurven fahren. Wenn er an ein Hindernis stößt oder eine Grenze des vorgegebenen Arbeitsbereichs detektiert oder überfährt, kann er auch rückwärts fahren, die Fahrtrichtung ändern und wieder vorwärts fahren.

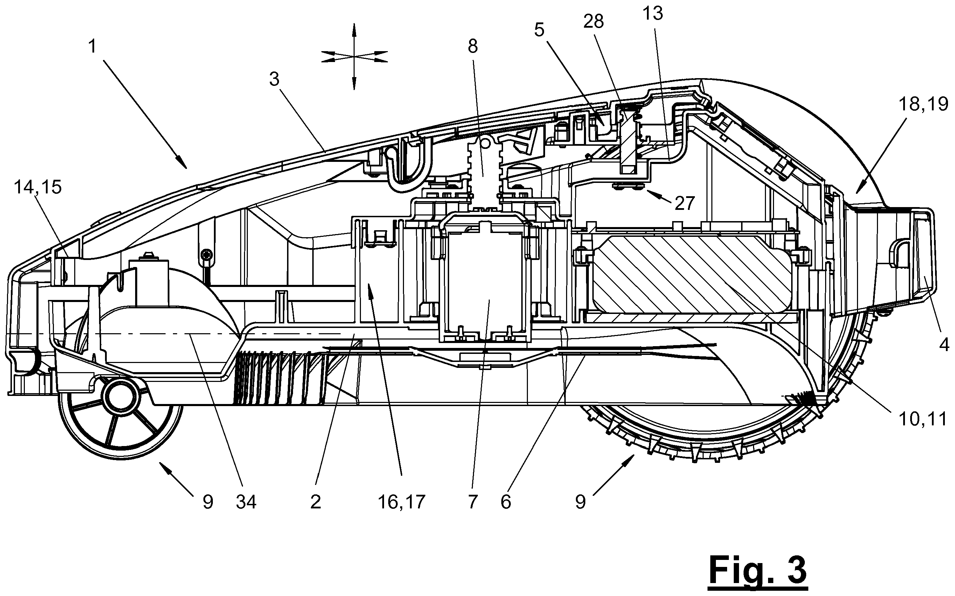

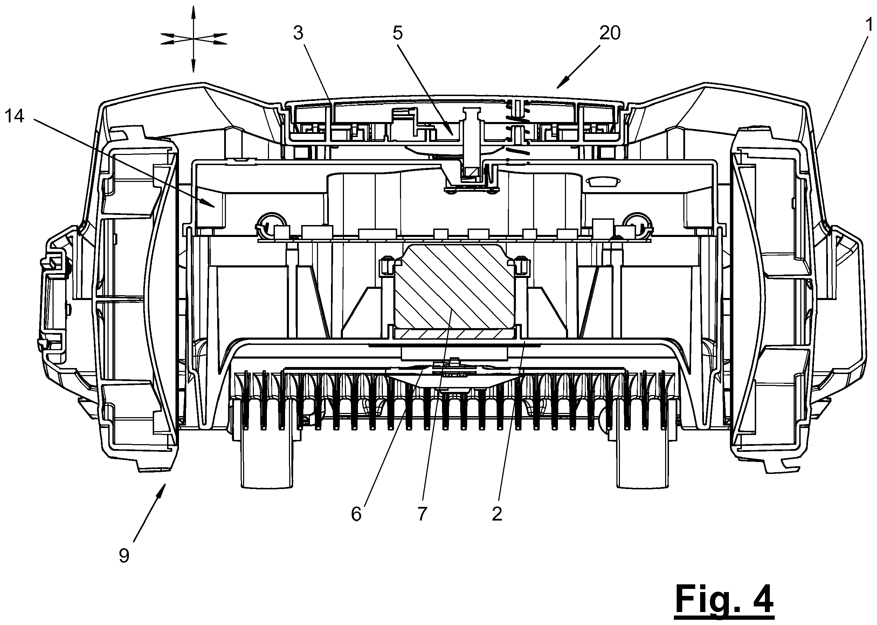

Wie Figuren 3 und 4 in teilweise geschnittener Darstellung verdeutlichen, hat der Mähroboter ein bewegliches Bearbeitungswerkzeug (6), hier ein rotierendes Schneidmesser, und einen Werkzeugantrieb (7), die beide am Chassis (2) angeordnet sind. Das Bearbeitungswerkzeug (6) befindet sich in geschützter Lage unter dem Chassis (2). Das Bearbeitungswerkzeug (6) kann ggf. zusammen mit seinem Werkzeugantrieb (7) in der Höhe verstellt werden. Hierfür ist z.B. eine manuelle Höhenverstellung (8) am Chassis (2) vorgesehen, die ggf. auch als motorische Höhenverstellung abgewandelt werden kann.

Das Chassis (2) weist eine bewegliche Abdeckung (3) auf, die auf einem Auflager (14) am Chassis (2) gehalten und abgestützt ist. Die Abdeckung (3) kann sich dabei relativ zum Chassis (2) bewegen. In Figur 3 sind mit Pfeilen verschiedene Bewegungsmöglichkeiten in der Höhe und zur Seite in verschiedenen Richtungen, insbesondere in der Vertikalen und in der Horizontalen in dortiger Längs- und Querrichtung, angedeutet. Das Auflager (14) bietet hierfür eine entsprechende Nachgiebigkeit.

Die Abdeckung (3) ist z.B. als eine nach unten offene Haube ausgebildet, die ein Dach und davon randseitig nach unten abstehende umlaufende Seitenwände aufweist. Die Abdeckung (3) übergreift das Chassis (2) oben und an den Seiten unter Einhaltung eines seitlichen Abstandes zum Chassisrand. Das Chassis (2) ist durch diesen Umgriff von oben und an den Seiten von außen her nicht oder nur in sehr kleinen Bereichen zugänglich.

Die Abdeckung (3) bildet die Außenkontur des Mähroboters (1). Sie kann an geeigneter Stelle, z.B. am Heck, einen Griff (4) aufweisen. Wenn der selbstfahrende Mähroboter (1) auf seinem Fahrweg gegen ein Hindernis stößt, findet dieser Kontakt an der Abdeckung (3) statt, die dabei eine entsprechende Ausweichbewegung durch ihre nachgiebige Lagerung (14) relativ zum Chassis (2) ausführt. Wenn der Mähroboter (1) am Griff (4) gefasst und bewegt, insbesondere angehoben oder gekippt wird, findet ebenfalls eine Relativbewegung zwischen der Abdeckung (3) und dem Chassis (2) statt.

Der Mähroboter (1) weist eine Detektionseinrichtung (5) auf, die mit der Abdeckung (3) zusammenwirkt und deren Bewegungen, insbesondere Relativbewegungen gegenüber dem Chassis (2), erfasst. Im gezeigten und bevorzugten Ausführungsbeispiel weist der Mähroboter (1) eine einzelne bzw. einzige Detektionseinrichtung (5) auf, die mit der Steuerung (11) verbunden ist. Alternativ können mehrere Detektionseinrichtungen (5) vorhanden sein.

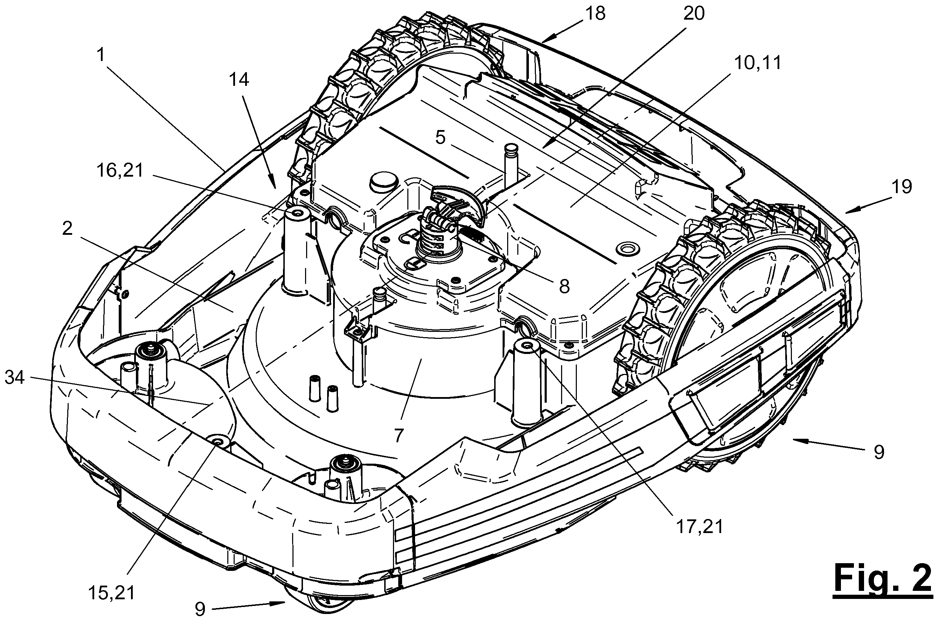

Das Auflager (14) für die Abdeckung (3) hat gemäß Figur 2 mehrere am Chassis (2) angeordnete Lagerstellen (15 - 19). Diese befinden sich auf dem Chassis (2). Sie sind in der Chassis-Hauptebene räumlich verteilt und mit gegenseitiger Distanz angeordnet. Das Chassis (2) weist drei oder mehr, vorzugsweise die in Figur 2 gezeigten fünf Lagerstellen auf. Diese sind in einer ringartigen Verteilung um einen zentralen Chassisbereich (20) angeordnet. Die Lagerstellen (15 - 19) haben eine kleine Größe und sind z.B. punktförmig ausgebildet.

Die Detektionseinrichtung (5) ist funktional und örtlich getrennt von den Lagerstellen (15 - 19) angeordnet. Sie befindet sich vorzugsweise im zentralen Chassisbereich (20) innerhalb des Rings von Lagerstellen (15 - 19). Sie hat dabei eine seitliche Distanz zu allen Lagerstellen (15 - 19). Gemäß Figur 3 kann die Detektionseinrichtung (5) auch eine erhöhte Stellung oberhalb der Lagerstellen (15 - 19) einnehmen und sich hierfür an einem erhabenen Sockel (13) des Chassis (2) befinden. Mit dem Detektionsverfahren über diese funktional und örtlich getrennt von den Lagerstellen (15-19) angeordnete Detektionseinrichtung (5) können die Abdeckungsbewegungen besonders sensibel und genau erfasst und ausgewertet werden.

Die Detektionseinrichtung (5) ist mit dem Chassis (2) und der Abdeckung (3) vorzugsweise direkt verbunden. Sie nimmt mehrachsige Bewegungen der Abdeckung (3) mit horizontalen und vertikalen Richtungskomponenten auf. Die Detektionseinrichtung (5) weist hierfür eine kompakte Sensoranordnung (27) mit mindestens einem Sensor auf. Vorzugsweise hat die Sensoranordnung (27) mehrere Sensoren (30,31), die unterschiedliche Erfassungsrichtungen haben, insbesondere für eine vertikale Hebebewegung und für horizontale bzw. seitliche Auslenkbewegungen.

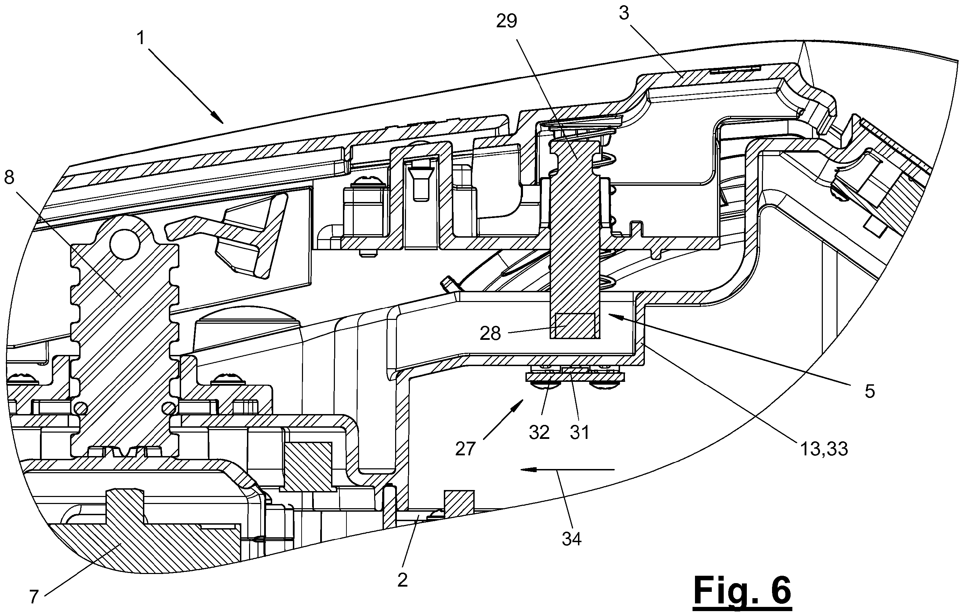

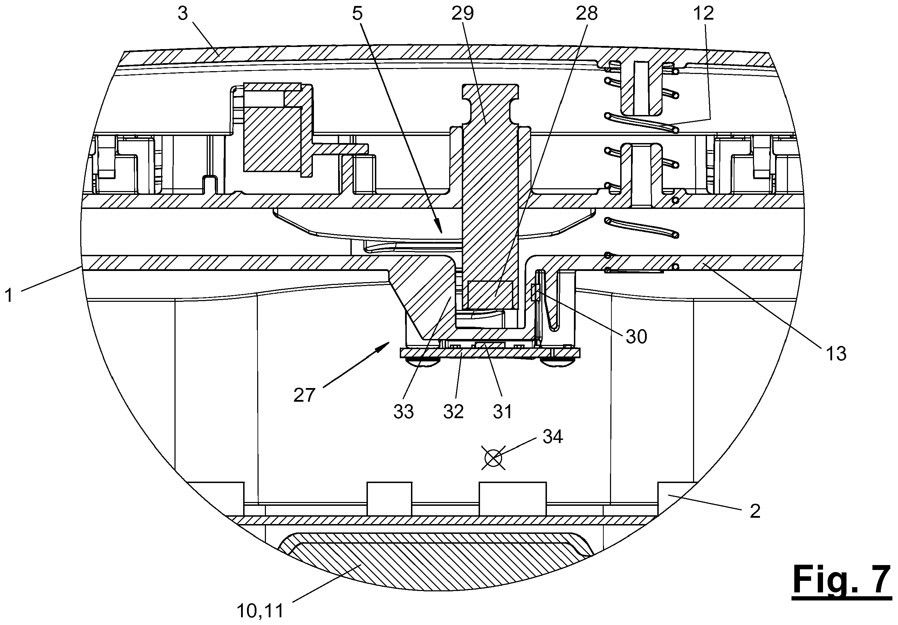

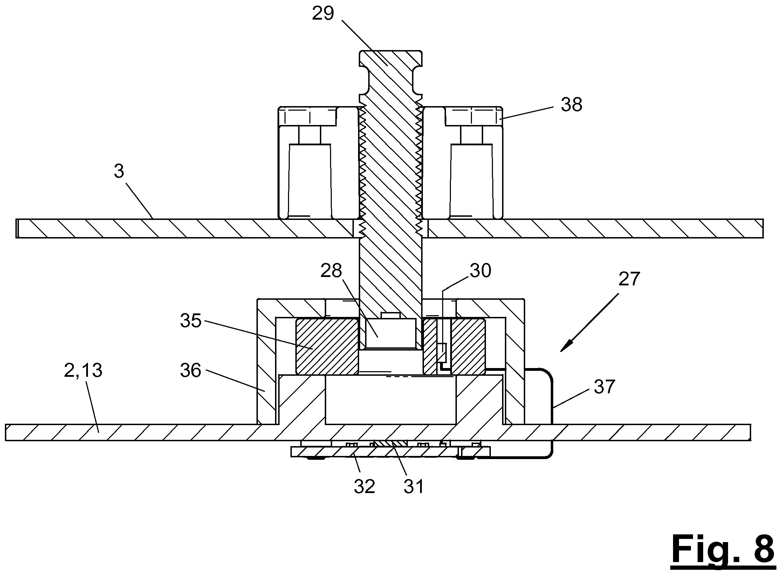

Eine Ausführungsform der Detektionseinrichtung (5) und ihrer Sensoranordnung (27) ist in Figur 6 und 7 im Detail dargestellt. Figur 8 zeigt hierzu eine Variante.

Die vorzugsweise am Chassis (2) befindliche Sensoranordnung (27) weist mehrere Sensoren (30,31) mit unterschiedlichen Erfassungsrichtungen auf, insbesondere einen Hebesensor (30) und einen hiervon getrennt angeordneten Auslenksensor (31).

Die Detektionseinrichtung (5) besitzt einen gemeinsamen Geber (28) für die Sensoranordnung (27), der mit mehreren Sensoren (30,31), insbesondere den Hebe- und Auslenksensoren, zusammenwirkt. Der Geber (28) und die Sensoranordnung (27) sind verborgen im Innenraum der Abdeckung (3) angeordnet. Der Geber (28) ist z.B. als Magnet ausgebildet, wobei die Sensoren (30,31) eine geeignete Ausbildung haben, um Bewegungen des Magnets (28) zur Seite und in der Höhe aufzunehmen. Der Geber (28) ist mit der Abdeckung (3) verbunden. Er kann sich hierbei am Ende eines z.B. aufrechten stangenförmigen Halters (29) befinden, der in einer Aufnahme an der Abdeckung (3) fest oder ggf. höhenverstellbar angeordnet ist. Die gezeigte Zuordnung von Geber (28) und Sensoranordnung (27) im Chassis (2) und zur Abdeckung (3) kann alternativ vertauscht sein.

Unterhalb des Gebers (28) ist mit Abstand ein Auslenksensor (31) angeordnet, der z.B. als Hallsensor ausgebildet ist. Seitlich neben dem Geber (28) bzw. dem Halter (29) ist ein Hebesensor (30) angeordnet, der z.B. als Magnetsensor oder auch als Hallsensor ausgebildet ist. Beide Sensoren (30,31) sind mit einer gemeinsamen Platine (32) verbunden. Die Platine (32) ist mit der Steuerung (11) verbunden. Die Platine (32) kann eine eigene Rechen- und Auswerteeinheit für die Verarbeitung der Sensorsignale aufweisen. Diese besagte Einheit kann alternativ auch in der Steuerung (11) angeordnet sein.

Ein oder beide Sensoren (30,31) können nicht nur ein Auftreten von Bewegungen sensieren, sondern auch die bei der jeweiligen Bewegung zurückgelegten Wege messen. Ein Sensor (30,31), insbesondere ein Hallsensor, kann hierfür eine Reihe oder ein Feld, insbesondere eine Matrix, von kleinen Sensorelementen aufweisen. Die Sensorelemente sind z.B. mit bekannter Position über eine Fläche verteilt, die größer als die Magnet- oder Feldfläche ist und sprechen erst bei hinreichender Annäherung des Gebers (28) an. Aus dem Ansprechverhalten ist die Geberbewegung nach Existenz, Richtung und Größe erfassbar.

Mit liegend oder horizontal angeordnetem Auslenksensor bzw. Hallsensor (31) kann eine durch eine seitliche Auslenkbewegung der Abdeckung (3) hervorgerufene horizontale Bewegung detektiert und gemessen werden. In entsprechender Weise kann auch der Hebesensor (30) bzw. Magnet- oder Hallsensor für eine Vertikalbewegung funktionieren.

Über die Wegmessung kann einerseits per Software die Sensoranordnung (27) eingestellt werden, wobei Fertigungstoleranzen ausgeglichen werden können. Andererseits kann die nach Bewegungsrichtungen getrennte Wegmessung über Erfassung einer ggf. mehrachsigen Abdeckungsbewegung und zur daraus abgeleiteten Beurteilung der funktionalen Bedeutung und der möglichen Ursache von Abdeckungsbewegungen herangezogen werden. In der Sensoranordnung (27) oder der Auswerteeinrichtung kann zusätzlich ein Zeitglied implementiert sein.

Wenn z.B. der Auslenksensor (31) eine seitliche oder horizontale Abdeckungsbewegung sensiert und zugleich der Hebesensor (30) kein oder nur ein sehr geringfügiges Signal abgibt, deutet dies auf die Kollision mit einem Hindernis bei der Fahrt hin. Die Steuerung (11) kann aufgrund dieser Signale eine entsprechende Steuermaßnahme einleiten, z.B. einen Stopp der Fahr- und Werkzeugbewegung mit anschließender Rückwärtsfahrt, nachfolgender Drehung und anschließender Weiterfahrt mit Zuschaltung des Werkzeugantriebs (7). Wenn andererseits der Hebesensor (30) anspricht und einen oberhalb einer Schaltschwelle liegenden Weg misst, wobei alternativ oder zusätzlich Bewegungsdauer eine vorgegebene Zeitschwelle überschreitet, wird dies von der Steuerung (11) als sicherheitsrelevante Anhebbewegung der Abdeckung (3), z.B. mittels des Griffes (4), interpretiert. Es besteht dann die Gefahr, dass durch Anheben oder Kippen des Mähroboters (1) das in normaler Fahrstellung verborgene Bearbeitungswerkzeug zugänglich wird und dass Unfallgefahr besteht. Mit einer Sicherheitsroutine kann dann der Werkzeugantrieb (7) und ggf. auch der Fahrantrieb (10) abgeschaltet werden. Ein erneutes Einschalten erfolgt erst wieder bei einem Bediener-Reset oder wenn die Abdeckung (3) wieder eine normale Stellung einnimmt und die Sensoranordnung (27) signalfrei ist.

Zur besseren und sicheren Detektion der Abdeckungsbewegungen kann zwischen der Abdeckung (3) und dem Chassis (2) eine Feder (12) angeordnet sein, die einen Teil des Abdeckungsgewichts trägt. Gemäß Figur 4 und 7 kann die direkt zwischen Chassis (2) und Abdeckung (3) angeordnete Feder (12) in der Nähe der Detektionseinrichtung (5) angeordnet sein. Die Feder (12) kann z.B. als Druckfeder ausgebildet sein. Sie kann einzeln oder mehrfach vorhanden sein.

Figur 6 und 7 verdeutlichen außerdem eine Ausbildung des Sockels (13) mit einer Aufnahmeöffnung (33), die in Längsrichtung (34) des Mähroboters (1) beidseitig den Geber (28) und den Halter (29) mit seitlichem Abstand umgibt, wodurch ein seitlicher Begrenzer für horizontale bzw. seitliche Abdeckungsbewegungen geschaffen wird. Die schachtartige Aufnahmeöffnung (33) kann in Axialrichtung nach vorn und hinten einen größeren Abstand zum Öffnungs- und Sockelrand haben und entsprechend größere Abdeckungsbewegungen erlauben. Die Sensoranordnung (27) kann geschützt unter bzw. hinter der z.B. aus Kunststoff bestehenden Sockel- bzw. Öffnungswandung angeordnet sein.

Die Variante der Sensoranordnung (27) von Figur 8 stimmt weitgehend mit dem Ausführungsbeispiel von Figur 6 und 7 überein. Sie unterscheidet sich hiervon durch die Anordnung des Hebesensors (30) an einer Halterung (35), die auf dem Chassis (2) in dessen Hauptebene in Längsrichtung (34) und in Querrichtung beweglich geführt ist. Die z.B. ringförmige Halterung (35) steht mit dem Geber (28) in einem seitlich führenden Eingriff und erlaubt dessen ungehinderte Hebe- und Senkbewegungen. Sie ist hierfür z.B. ringförmig mit einer zentralen Durchgangsöffnung für den Geber (28) ausgebildet und in einem umgebenden Gehäuse (36) angeordnet, welches auf dem Sockel (13) des Chassis (2) angeordnet ist. Der Hebesensor ist an der Halterung (35) nahe der Durchgangsöffnung angeordnet und kann sich dank flexibler Leitungen (37) mit der Halterung (35) bewegen.

Der Halter (29) ist mit der Abdeckung (3) z.B. über eine Schraubfassung (38) starr mit Höhenverstellbarkeit verbunden. Bei seitlichen bzw. horizontalen Ausweichbewegungen der Abdeckung (3) im Kollisionsfall nimmt der Geber (28) die Halterung (35) und den Hebesensor (30) mit. Dabei bleibt die seitliche Relativlage zwischen Geber (29) und Hebesensor (30) erhalten. Eine zusätzliche Vertikalbewegung, insbesondere die in Figur 8 gezeigte Hebebewegung, der Abdeckung (3) kann dadurch auch bei einem Seitenversatz der Abdeckung (3) zuverlässig und mit gleich bleibender Präzision detektiert werden.

Der seitliche Begrenzer (33) kann bei der Variante von Figur 8 entfallen, so dass Abdeckungsbewegungen in Längsrichtung (34) und in Querrichtung sowie in den Schrägrichtungen gleichermaßen möglich sind und gut detektiert werden können. Die Sensitivität der Detektionseinrichtung (5) wird dadurch erhöht. Die Sensoranordnung (27) von Figur 8 kann ansonsten hinsichtlich des Auslenksensors (31) und der Platine (32) die gleiche Ausbildung wie bei Figur 6 und 7 haben.

Gemäß Figur 2 kann die Detektionseinrichtung (5) zu den heckseitigen Lagerstellen (18, 19) einen kleineren Abstand als zu den anderen Lagerstellen, insbesondere zur einzelnen frontseitigen Lagerstelle (15) haben. Die Detektionseinrichtung (5) ist dadurch auch in der Nähe des heckseitigen Griffs (4) angeordnet. Die Bewegungen der Abdeckung (3) äußern sich üblicherweise als Schwenkbewegungen mindestens einer der Lagerstellen (15 bis 19). Mit der gezeigten Anordnung kann eine Bedienermanipulation und ein Anheben der Abdeckung (3) am Griff besser und zuverlässiger erkannt und von anderen weniger bedeutsamen Hebebewegungen, die z.B. durch Kollision und Auffahren an einem Hindernis verursacht werden, unterscheiden.

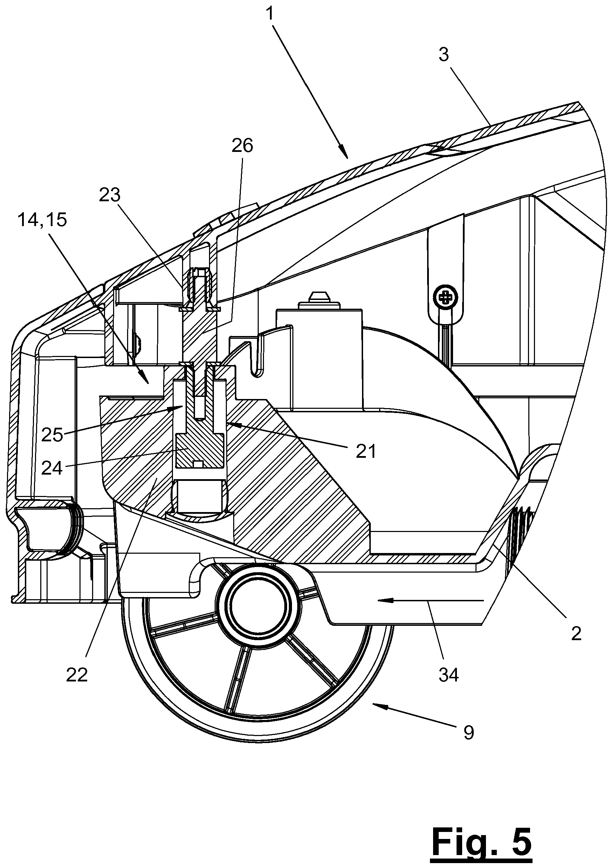

Das Auflager (14) hat eine Nachgiebigkeit in der aufrechten oder vertikalen Richtung und in der horizontalen Ebene oder der Chassis-Hauptebene. Die Lagerstellen (15 bis 19) sind hierfür entsprechend ausgebildet. Figur 5 verdeutlicht beispielhaft eine solche Gestaltung. Die Lagerstelle (15) weist z.B. ein aufrechtes Stützelement (21) auf, das in einer Aufnahme (22) am Chassis (2) gehalten ist und das eine horizontale Nachgiebigkeit aufweisen kann. Hierfür besitzt das Stützelement (21) z.B. einen aufrechten Stützbolzen (24) in der Aufnahme (22) und einen am freien Bolzenende angeordneten elastischen Puffer (26), der z.B. als Gummipuffer ausgebildet sein kann und der sich bei horizontalen Auslenkbewegungen verformen kann.

Der Gummipuffer (26) weist an der Ober- und Unterseite stangenartige Fortsätze auf, wobei der untere Fortsatz mit dem hohlen Stützbolzen (24) fest verbunden ist, z.B. mit einem Gewinde. Der obere Fortsatz des Puffers (26) greift in eine rohrförmige Führung (23) an der Abdeckung (3) und ist dort mit Klemmschluss oder auf andere geeignete Weise befestigt. Der Stützbolzen (24) ist in der Aufnahme (22) axial beweglich geführt und kann hierbei von einer in Figur 5 schematisch durch einen Pfeil (25) angedeuteten Feder nach unten in Anschlagstellung am Chassis (2) gedrückt werden. Bei einer Hebebewegung der Abdeckung (3) werden der Puffer (26) und der Stützbolzen (24) gegen die Kraft der Feder (25) mitgenommen, wobei die Hebebewegung durch den Federanschlag in der Höhe begrenzt ist. Bei einer solchen Anordnung lässt sich die Abdeckung (3) nur mit Werkzeug vom Chassis (2) bzw. vom Stützbolzen (24) lösen und entfernen.

In einer alternativen Ausführungsform kann der Puffer (26) eines Stützelements (21) direkt an einer Aufnahme (22) befestigt sein, wobei die vertikale Führung (23) nur lose auf dem Puffer (26) aufsitzt und hierdurch ein Abheben der Abdeckung (3) und ein Entfernen vom Puffer (26) erlaubt. Bei der gezeigten Ausführungsform kann die Feder (25) alternativ fehlen oder nur bei einzelnen Stützelementen (21) vorhanden sein. Die anderen Lagerstellen (16 bis 19) der Stützelemente (21) können in gleicher Weise wie in Figur 5 ausgebildet sein. Sie können alternativ eine andere Ausgestaltung haben. Die hinteren Lagerstellen (18, 19) sind der Übersichtlichkeit halber in den Zeichnungen nicht dargestellt und durch Pfeile angedeutet.

Abwandlungen der gezeigten und beschriebenen Ausführungsformen sind in verschiedener Weise möglich. Die Zahl der Lagerstellen (15 bis 19) und deren konstruktive Ausbildung können variieren. Die Detektionseinrichtung (5) kann mehrteilig bzw. mehrfach vorhanden sein, wobei sie ggf. eine andere Sensoranordnung (27) aufweist, die z.B. aus einem einzelnen Sensor besteht. Die Auslenk- und Hebebewegungen der Abdeckung (3) können dadurch an unterschiedlichen und insbesondere voneinander distanzierten Stellen erfasst werden. Ferner ist es möglich, dass die Zahl und Anordnung der Sensoren (30,31) abgewandelt wird, indem noch andere Sensoren für andere Bewegungsrichtungen, z.B. auch für eine Drehbewegung der Abdeckung (3), vorhanden sind. Einzelne oder alle Sensoren (30, 31) können zudem einzeln oder mehrfach vorhanden sein.

In einer nicht dargestellten Variante zu Figur 6 und 7 kann ein liegender Ablenkungssensor (31) unter dem Geber (28) und ein Hebesensor (31) in Längsrichtung (34) des Bearbeitungsgeräts (1) gesehen hinter dem Geber (28) an der Rückwand der schachtartigen Aufnahmeöffnung (33) angeordnet sein. In weiterer Abwandlung kann ein Hebesensor (30) mit einer entsprechenden Matrixverteilung von Sensorelementen horizontale und vertikale Geberbewegungen erfassen. Ein solcher Hebesensor (30) kann z.B. an einer längs gerichteten Seitenwand der schachtartigen Aufnahmeöffnung (33) angeordnet sein und dadurch Hebebewegungen und Auslenkbewegungen entlang der besagten Längsachse (34) detektieren. Ein solcher Hebesensor (30) kann zusätzlich zum liegenden Auslenksensor (31) vorhanden sein oder kann diesen alternativ ersetzen.

Bei Fahrkollisionen werden vornehmlich Abdeckungsbewegungen mit einer Bewegungskomponente in Längsrichtung(34) bzw. in entsprechender Fahrtrichtung des Mähroboters (1) detektiert. Reine Seitenkollisionen, die zu einer ausschließlich quer zur besagten Längsrichtung (34) gerichteten Abdeckungs- oder Auslenkbewegungen führen, sind eher selten. Auf deren Erfassung kann gegebenenfalls verzichtet werden. Die Schachtöffnung (33) kann hierfür gegebenenfalls eine vergrößerte Breite oder Weite aufweisen. Andererseits ist es möglich, drei oder mehr Sensoren (30,31) vorzusehen, die z.B. über Eck oder umlaufend an Rück- und Seitenwänden der Aufnahmeöffnung (33) angeordnet sind und dabei einen am Öffnungsboden liegend angeordneten Sensor ergänzen oder ersetzen. Eine solche Mehrfachanordnung von Sensoren kann sinnvoll sein, um komplexere Abdeckungsbewegungen, insbesondere auch Drehbewegungen um die Hochachse, zu erfassen.

Weitere Varianten sind hinsichtlich der sonstigen konstruktiven Ausbildung des Mähroboters (1), insbesondere hinsichtlich des Fahrwerks (9) und des oder der Antriebe (7, 10) oder des Bearbeitungswerkzeugs (6) möglich.

Alternativ kann der vorbeschriebe Mähroboter als anderes Bodenbearbeitungsgerät (1), insbesondere als Vertikutierer oder sonstiges Gerät zur Rasenpflege, als Reinigungsgerät oder in sonstiger geeigneter Weise ausgebildet sein. Die vorbeschriebenen Merkmale des Mähroboters (1) gelten hierfür entsprechend und sind ggf. in Anpassung an eine andere Bearbeitungsfunktion abgewandelt.

### BEZUGSZEICHENLISTE

- 1: Bodenbearbeitungsgerät, Mähroboter
- 2: Chassis
- 3: Abdeckung, Haube
- 4: Griff
- 5: Detektionseinrichtung, Sicherheitseinrichtung
- 6: Bearbeitungswerkzeug, Schneidmesser
- 7: Werkzeugantrieb, Messerantrieb
- 8: Höhenverstellung
- 9: Fahrwerk
- 10: Fahrantrieb
- 11: Steuerung
- 12: Auflagefeder
- 13: Sockel
- 14: Auflager
- 15: Lagerstelle für Abdeckung
- 16: Lagerstelle für Abdeckung
- 17: Lagerstelle für Abdeckung
- 18: Lagerstelle für Abdeckung
- 19: Lagerstelle für Abdeckung
- 20: zentraler Chassisbereich
- 21: Stützelement
- 22: Aufnahme
- 23: Führung
- 24: Stützbolzen
- 25: Feder
- 26: Puffer
- 27: Sensoranordnung
- 28: Geber, Magnet
- 29: Halter
- 30: Sensor, Hebesensor, Magnetsensor
- 31: Sensor, Auslenksensor, Hallsensor
- 32: Platine
- 33: Aufnahmeöffnung, Begrenzer
- 34: Längsrichtung, Längsachse, Fahrtrichtung
- 35: Halterung
- 36: Gehäuse
- 37: Leitung flexibel
- 38: Schraubfassung

## Patentansprüche

1. Selbstfahrender Mähroboter (1), welcher ein Chassis (2), ein Fahrwerk (9) mit Fahrantrieb (10), ein angetriebenes Bearbeitungswerkzeug (6), eine Steuerung (11), ein Auflager (14) für eine auf dem Chassis (2) beweglich aufliegende Abdeckung (3) und eine mit der Abdeckung (3) zusammenwirkende Detektionseinrichtung (5) zur Erfassung von Abdeckungsbewegungen aufweist, wobei das Auflager (14) mehrere am Chassis (2) angeordnete Lagerstellen (15-19) aufweist **dadurch gekennzeichnet, dass** die Detektionseinrichtung (5) funktional und örtlich getrennt von den Lagerstellen (15-19) angeordnet ist, wobei die Detektionseinrichtung (5) eine Sensoranordnung (27) mit einer Wegmessung und einer Auswertung der Messergebnisse aufweist, wobei die Sensoranordnung (27) über die Wegmessung und die Auswertung einstellbar und an den Mähroboter (1) und dessen Toleranzen adaptierbar ist.

2. Mähroboter nach Anspruch 1, **dadurch**
**gekennzeichnet, dass** drei oder mehr, insbesondere fünf Lagerstellen (15-19) räumlich verteilt und mit gegenseitiger Distanz angeordnet sind, wobei die bevorzugt einzelne Detektionseinrichtung (5) zwischen den Lagerstellen (15-19) mit Distanz dazu angeordnet ist.

3. Mähroboter nach Anspruch 1 oder 2, **dadurch gekennzeichnet, dass** die Detektionseinrichtung (5) erhöht über den Lagerstellen (15-19) angeordnet ist.

4. Mähroboter nach Anspruch 1, 2 oder 3, **dadurch**
**gekennzeichnet, dass** die Detektionseinrichtung (5) mehrachsige Bewegungen der Abdeckung (3) mit horizontalen und vertikalen Richtungskomponenten erfasst.

5. Mähroboter nach einem der vorhergehenden Ansprüche, **dadurch gekennzeichnet, dass** die Detektionseinrichtung (5) eine kompakte Sensoranordnung (27) mit mehreren Sensoren (30,31) mit unterschiedlichen Erfassungsrichtungen, insbesondere mit einem Hebesensor (30) und einem separaten Auslenksensor (31), aufweist.

6. Mähroboter nach einem der vorhergehenden Ansprüche, **dadurch gekennzeichnet, dass** die Detektionseinrichtung (5) einen gemeinsamen Geber (28) für die Sensoranordnung (27) aufweist, der mit mehreren Sensoren (30,31), insbesondere Hebe- und Auslenksensoren (30,31), zusammenwirkt.

7. Mähroboter nach Anspruch 6, **dadurch**
**gekennzeichnet, dass** der Geber (28), insbesondere ein Magnet, an einem stangenartigen, aufrechten sowie festen oder verstellbaren Halter (29) angeordnet und in Normalstellung mit Abstand über der Sensoranordnung (27) positioniert ist.

8. Mähroboter nach Anspruch 6 oder 7, **dadurch**
**gekennzeichnet, dass** die Sensoranordnung (27) eine unter dem Geber (28) liegend positionierten Auslenksensor (31), insbesondere einen Hallsensor, und einen neben dem Geber (28) positionierten Hebesensor (30), insbesondere Magnetsensor, aufweist.

9. Mähroboter nach Anspruch 8, **dadurch**
**gekennzeichnet, dass** der Hebesensor (30) an einer am Chassis (2) ausweichfähig gelagerten Halterung (35) angeordnet ist, die mit dem Geber (28) in einem seitlich führenden Eingriff steht.

10. Mähroboter nach einem der vorhergehenden Ansprüche, **dadurch gekennzeichnet, dass** die bevorzugt als Haube ausgebildete Abdeckung (3) das Chassis (2) oben und an den Seiten mit einem seitlichen Abstand übergreift.

11. Mähroboter nach einem der vorhergehenden Ansprüche, **dadurch gekennzeichnet, dass** die Abdeckungen (3) am Auflager (14) mit einer mehrachsigen Nachgiebigkeit, insbesondere mit einer vertikalen und horizontalen Nachgiebigkeit, gehalten ist.

12. Mähroboter nach einem der vorhergehenden Ansprüche, **dadurch gekennzeichnet, dass** die Lagerstellen (15-19) jeweils ein Stützelement (21) am Chassis (2) mit einer horizontalen Nachgiebigkeit, insbesondere einen bevorzugt aufrechten Stützbolzen (24) mit einem elastischen Puffer (26), aufweisen.

13. Mähroboter nach Anspruch 12, **dadurch**
**gekennzeichnet, dass** die Abdeckung (3) auf dem Stützbolzen (24) lose aufliegt oder mit dem in der Vertikalen federnd nachgiebigen Stützbolzen (24) fest verbunden ist.

14. Verfahren zum Detektieren von Kollisionen eines selbstfahrenden Mähroboters (1) mit Hindernissen im Fahrweg und von unfallträchtigen Handhabungsbewegungen eines Bedieners, wobei der Mähroboter ein Chassis (2), ein Fahrwerk (9) mit Fahrantrieb (10), ein angetriebenes Bearbeitungswerkzeug (6), eine Steuerung (11), ein Auflager (14) mit mehreren, auf dem Chassis (2) angeordneten Lagerstellen (15-19) für eine auf dem Chassis (2) beweglich aufliegende Abdeckung (3) und eine mit der Abdeckung (3) zusammenwirkende Detektionseinrichtung (5) aufweist, **dadurch gekennzeichnet, dass** die Abdeckungsbewegungen mit einer Detektionseinrichtung (5) aufgenommen werden, die funktional und örtlich getrennt von den Lagerstellen (15-19) angeordnet ist, wobei die Detektionseinrichtung (5) eine Sensoranordnung (27) mit einer Wegmessung und einer Auswertung der Messergebnisse aufweist, wobei die Sensoranordnung (27) über die Wegmessung und die Auswertung eingestellbar und an den Mähroboter (1) und dessen Toleranzen adaptierbar ist.

15. Verfahren nach Anspruch 14, **dadurch**
**gekennzeichnet, dass** erfasste und ggf. mehrachsige Abdeckungsbewegungen anhand der gemessenen Wege in ihrer Bedeutung und Ursache bewertet werden.

## Claims

1. Self-propelling robotic mower (1) which has a chassis (2), running gear (9) with a traction drive (10), a driven processing tool (6), a controller (11), a bearing (14) for a cover (3) which rests in a movable fashion on the chassis (2), and a detection device (5) which interacts with the cover (3) and which has the purpose of sensing movements of the cover, wherein the bearing (14) has a plurality of bearing points (15-19) which are arranged on the chassis (2), **characterized in that** the detection device (5) is arranged functionally and spatially separate from the bearing points (15-19), wherein the detection device (5) has a sensor arrangement (27) with a travel measuring means and a means for evaluating the measurement results, wherein the sensor arrangement (27) can be adjusted by means of the travel measuring means and the evaluation means and can be adapted to the robotic mower (1) and the tolerances thereof.

2. Robotic mower according to Claim 1, **characterized in that** three or more, in particular five, bearing points (15-19) are arranged spatially distributed and with a mutual distance, wherein the one preferably single detection device (5) is arranged between the bearing points (15-19) at a distance thereto.

3. Robotic mower according to Claim 1 or 2, **characterized in that** the detection device (5) is arranged at a raised level above the bearing points (15-19).

4. Robotic mower according to Claim 1, 2 or 3, **characterized in that** the detection device (5) senses multi-axis movements of the cover (3) with horizontal and vertical directional components of movements.

5. Robotic mower according to one of the preceding claims, **characterized in that** the detection device (5) has a compact sensor arrangement (27) with a plurality of sensors (30, 31) having different sensing directions, in particular with a lifting sensor (30) and a separate deflection sensor (31).

6. Robotic mower according to one of the preceding claims, **characterized in that** the detection device (5) has a common signal transmitter (28) for the sensor arrangement (27), which signal transmitter (28) interacts with a plurality of sensors (30, 31), in particular lifting sensors (30, 31) and deflection sensors (30, 31).

7. Robotic mower according to Claim 6, **characterized in that** the signal transmitter (28), in particular a magnet, is arranged on a rod-like, upright and fixed or adjustable holder (29) and is positioned in the normal setting at a distance above the sensor arrangement (27).

8. Robotic mower according to Claim 6 or 7, **characterized in that** the sensor arrangement (27) has a deflection sensor (31), in particular a Hall sensor, which is positioned lying under the signal transmitter (28), and a lifting sensor (30), in particular a magnet sensor, which is positioned next to the signal transmitter (28).

9. Robotic mower according to Claim 8, **characterized in that** the lifting sensor (30) is arranged on a mount (35) which is supported in a deflectable fashion on the chassis (2) and is in laterally guiding engagement with the signal transmitter (28) .

10. Robotic mower according to one of the preceding claims, **characterized in that** the cover (3) which is preferably embodied as a hood engages over the chassis (2) at the top and at the sides with a lateral distance.

11. Robotic mower according to one of the preceding claims, **characterized in that** the covers (3) are held on the bearing (14) with multi-axis flexibility, in particular with vertical and horizontal flexibility.

12. Robotic mower according to one of the preceding claims, **characterized in that** the bearing points (15-19) each have a supporting element (21) on the chassis (2) with horizontal flexibility, in particular a preferably upright supporting bolt (24) with an elastic buffer (26).

13. Robotic mower according to Claim 12, **characterized in that** the cover (3) rests loosely on the supporting bolt (24) or is fixedly connected to the supporting bolt (24) which is flexible in the sprung fashion in the vertical direction.

14. Method for detecting collisions of a self-propelling robotic mower with obstacles in the travel path and for detecting handling movements for an operator which could contribute to an accident, wherein the robotic mower has a chassis (2), running gear (9) with a traction drive (10), a driven processing tool (6), a controller (11), a bearing (14) with a plurality of bearing points (15-19) which are arranged on the chassis (2), for a cover (3) which rests in a movable fashion on the chassis (3), and a detection device (5) which interacts with the cover (3), **characterized in that** the movements of the cover are picked up with a detection device (5) which is arranged functionally and spatially separate from the bearing points (15-19), wherein the detection device (5) has a sensor arrangement (27) with a travel measuring means and a means for evaluating the measurement results, wherein the sensor arrangement (27) can be adjusted by means of the travel measuring means and the evaluation means and can be adapted to the robotic mower (1) and the tolerances thereof.

15. Method according to Claim 14, **characterized in that** sensed and, if appropriate, multi-axis movements of the cover are assessed in terms of their significance and cause on the basis of the measured travel values.

## Revendications

1. Tondeuse robotisée (1) automoteur, qui présente un châssis (2), un train de roulement (9) doté d'un entraînement de déplacement (10), un outil de traitement (6) entraîné, une commande (11), un support (14) pour un couvercle (3) posé à déplacement sur le châssis (2) et un dispositif de détection (5) qui coopère avec le couvercle (3) pour saisir des déplacements du couvercle,
le support (14) présentant plusieurs emplacements de montage (15-19) disposés sur le châssis (2), **caractérisé en ce que**
le dispositif de détection (5) est disposé de manière à être séparé fonctionnellement et spatialement des emplacements de montage (15-19), le dispositif de détection (5) présentant un ensemble (27) de capteurs, une mesure du déplacement effectué et une évaluation des résultats de mesure, l'ensemble (27) de capteurs pouvant être ajusté par l'intermédiaire de la mesure du déplacement effectué et de l'évaluation et pouvant être adapté au tondeuse robotisée (1) et à ses tolérances.

2. Tondeuse robotisée selon la revendication 1, **caractérisé en ce qu'**il présente trois ou plus, en particulier cinq emplacements de montage (15-19) répartis spatialement et disposés à distance mutuelle, le dispositif de détection (5), de préférence unique, étant disposé entre les emplacements de montage (15-19) et à distance de ces derniers.

3. Tondeuse robotisée selon les revendications 1 ou 2, **caractérisé en ce que** le dispositif de détection (5) est disposé plus haut que les emplacements de montage (15-19) .

4. Tondeuse robotisée selon les revendications 1, 2 ou 3, **caractérisé en ce que** le dispositif de détection (5) saisit des déplacements multiaxiaux du couvercle (3) qui présentent des composantes directionnelles horizontales et verticales.

5. Tondeuse robotisée selon l'une des revendications précédentes, **caractérisé en ce que** le dispositif de détection (5) présente un ensemble compact (27) de capteurs présentant plusieurs capteurs (30, 31) dont les directions de saisie sont différentes, en particulier un capteur de relèvement (30) et un capteur séparé de déviation (31).

6. Tondeuse robotisée selon l'une des revendications précédentes, **caractérisé en ce que** le dispositif de détection (5) présente une sonde commune (28) pour l'ensemble (27) de capteurs, qui coopère avec plusieurs capteurs (30, 31) et en particulier avec les capteurs de relèvement et de déviation (30, 31).

7. Tondeuse robotisée selon la revendication 6, **caractérisé en ce que** la sonde (28), en particulier un aimant, est disposé sur un support en forme de tige, debout et fixe ou ajustable (29), et est positionné en position normale à distance au-dessus de l'ensemble (27) de capteurs.

8. Tondeuse robotisée selon les revendications 6 ou 7, **caractérisé en ce que** l'ensemble (27) de capteurs présente un capteur de déviation (31) disposé en dessous de la sonde (28), en particulier un capteur de Hall, et un capteur de relèvement (30) disposé à côté de la sonde (28), en particulier un capteur magnétique.

9. Tondeuse robotisée selon la revendication 8, **caractérisé en ce que** le capteur de relèvement (30) est disposé sur un support (35) monté sur le châssis (2) de manière à pouvoir se déployer et qui engage la sonde (28) en le guidant latéralement.

10. Tondeuse robotisée selon l'une des revendications précédentes, **caractérisé en ce que** le couvercle (3) de préférence configuré comme capot chevauche le châssis (2) par le haut et sur les côtés à une distance latérale.

11. Tondeuse robotisée selon l'une des revendications précédentes, **caractérisé en ce que** le couvercle (3) est maintenu sur le support (14) avec une aptitude à se déformer sous plusieurs axes, en particulier une déformabilité verticale et une déformabilité horizontale.

12. Tondeuse robotisée selon l'une des revendications précédentes, **caractérisé en ce que** les emplacements de montage (15-19) présentent chacun un élément de soutien (21) sur le châssis (2), doté d'une déformabilité horizontale, et en particulier un goujon de soutien (24) de préférence debout doté d'un tampon élastique (26) .

13. Tondeuse robotisée selon la revendication 12, **caractérisé en ce que** le couvercle (3) repose lâchement sur le goujon de soutien (24) ou est relié solidairement au goujon de soutien (24) déformable élastiquement dans la direction verticale.

14. Procédé de détection de collision d'un tondeuse robotisée automoteur (1) avec des obstacles situés sur son parcours de déplacement et de mouvements risqués de manipulation par un opérateur, le tondeuse robotisée présentant un châssis (2), un train de roulement (9) doté d'un entraînement de déplacement (10), un outil de traitement (6) entraîné, une commande (11), un support (14) pour un couvercle (3) posé à déplacement sur le châssis (2) et un dispositif de détection (5) qui coopère avec le couvercle (3) pour saisir des déplacements du couvercle,
**caractérisé en ce que**
les déplacements du couvercle sont enregistrés par un dispositif de détection (5) disposé de manière à être séparé fonctionnellement et spatialement des emplacements de montage (15-19), le dispositif de détection (5) présentant un ensemble (27) de capteurs, une mesure des déplacements effectués et une évaluation des résultats de mesure, l'ensemble (27) de capteurs pouvant être ajusté par l'intermédiaire de la mesure du déplacement effectué et de l'évaluation et pouvant être adapté au tondeuse robotisée (1) et à ses tolérances.

15. Procédé selon la revendication 14, **caractérisé en ce que** la signification et la cause des déplacements saisis et éventuellement multiaxes du couvercle soient évaluées à l'aide de la mesure de leur parcours.
